# EUROPÄISCHE PATENTSCHRIFT

(11) **EP 0 865 970 B1**
(45) Veröffentlichungstag und Bekanntmachung des Hinweises auf die Patenterteilung: **30.03.2005**
(21) Anmeldenummer: 98100621.6
(22) Anmeldetag: 15.01.1998
(51) Int. Cl.: B60R 11/02

(54) **Vorrichtung und Verfahren zur Diebstahlsicherung von Zusatzgeräten**
Antitheft device and method for accessories
Dispositif et méthode de protection d'accessoires contre le vol

(30) Priorität: 28.02.1997 DE 19708314
(43) Veröffentlichungstag der Anmeldung: 23.09.1998
(73) Patentinhaber: Volkswagen Aktiengesellschaft, 38436 Wolfsburg (DE)
(72) Erfinder: Schönemann, Otto, 38444 Wolfsburg (DE); Besel, Klaus-Gert, 38126 Braunschweig (DE); Warnecke, Helmut, Dipl.-Ing., 31224 Peine (DE)
(74) Vertreter: Banzer, Hans-Jörg, Dipl.-Ing.

(56) Entgegenhaltungen:
- DE-A- 19 526 542
- PATENT ABSTRACTS OF JAPAN vol. 1995, no. 06, 31. Juli 1995 (1995-07-31) & JP 07 073055 A (FUJITSU TEN LTD), 17. März 1995 (1995-03-17)

## Beschreibung

Die Erfindung betrifft eine Vorrichtung zur Diebstahlsicherung eines zum Betrieb in Kraftfahrzeugen vorgesehenen Zusatzgerätes mit einer Einrichtung zum Speichern eines ersten Vergleichscodes, die eine Auswerteeinrichtung aufweist, die den ersten Vergleichscode mit einem ersten Identitätscode vergleicht und bei Übereinstimmung von ersten Vergleichs- und ersten Identitätscodes das Zusatzgerät betriebsbereit schaltet oder in Betrieb setzt, sowie ein Verfahren zur Diebstahlsicherung eines zum Betrieb in Kraftfahrzeugen vorgesehenen Zusatzgerätes, bei dem in einer Auswerteeinrichtung ein in einer Einrichtung zum Speichern eines Vergleichscodes abgelegtet erstet Vergleichscode mit einem ersten Identitätscode verglichen wird und bei Übereinstimmung von erstem Vergleichscode und erstem Identitätscode das Zusatzgerät durch die Auswerteeinrichtung betriebsbereit geschaltet oder in Betrieb gesetzt wird.

Immer häufiger werden in Kraftfahrzeugen hochwertige Zusatzgeräte, wie beispielsweise Autoradios, CD-Player oder Wechsler sowie Mobiltelefon eingesetzt. Wegen der großen Anzahl von Diebstählen solcher Zusatzgeräten sind bereits zahlreiche Sicherheitsvorkehrungen bekannt geworden. So sind beispielsweise Autoradios bekannt, die nach einer Unterbrechung der Betriebsspannung nur durch Eingabe eines Codes in Betrieb genommen werden können. Eine solche Diebstahlsicherung weist jedoch den Nachteil auf, daß die Eingabe eines Codes erforderlich wird. Dies führt dann zu Schwierigkeiten, wenn der Inhaber den Code vergessen bzw. eine entsprechende Notiz verlegt hat.

Zur Vermeidung dieses Nachteils wird in der deutschen Offenlegungsschrift DE 195 26 542 A1 eine Vorrichtung zur Sicherung von Zusatzgeräten gemäß dem Oberbegriff von Anspruch 1 und ein entsprechendes Verfahren zur Sicherung von Zusatzgeräten gemäß dem Oberbegriff von Anspruch 9 offenbart. Das Zusatzgerät, beispielsweise das Radio, weist einen Eingang für einen Code auf, der über eine Datenleitung von einer im Fahrzeug vorhandenen Wegfahrsperre zuführbar ist und den Betrieb des Gerätes freigibt, wenn der zugeführte Code mit einem im Gerät gespeicherten Vergleichscode korrespondiert. Der zugeführte Code und der gespeicherte Vergleichscode müssen dabei nicht identisch sein. Sie können auch in einem vorgegebenen oder wechselnden Zusammenhang stehen. Für den Fall, daß berechtigterweise ein Gerät in ein anderes Kraftfahrzeug eingebaut werden soll oder für den Fall, daß in einem Kraftfahrzeug die Wegfahrsperre durch eine andere mit einem anderen Code ersetzt wird, ist vorgesehen, daß der Vergleichscode nach einer Sicherheitsuberprüfung veränderbar ist. Es ist weiterhin vorgesehen, daß beim Neueinbau und auch bei der Änderung des Vergleichscodes in dem Gerät ein vorläufiger Code gespeichert wird, der eine einmalige Inbetriebnahme zum Zwecke des Lernens des von der Wegfahrsperre zugeführten Codes ermöglicht.

In zunehmendem Maße werden heute Wegfahrsperren mit Wechselcodes eingesetzt, so daß auch der Vergleichscode des Zusatzgerätes mit einem zusätzlichen Aufwand permanent verändert werden muß.

Die Aufgabe der Erfindung ist es, ein Verfahren und eine Vorrichtung zur Diebstahlsicherung von Zusatzgeräten eines Kraftfahrzeuges zu schaffen, die trotz einer hohen Schutzfunktion bei Unterbrechung der Betriebsspannung ohne Diebstahlabsicht auf einfache Weise eine Inbetriebnahme des Gerätes ermöglichen.

Die Aufgabe wird durch eine Vorrichtung mit den Merkmalen des Patentanspruchs 1 und ein Verfahren mit den Merkmalen des Patentanspruchs 9 gelöst. Vorteilhafte Aus- und Weiterbildungen der Erfindung sind in den Unteransprüchen dargestellt.

Bei einer Vorrichtung zur Diebstahlsicherung eines zum Betrieb in Kraftfahrzeugen vorgesehenen Zusatzgerätes mit einer Einrichtung zum Speichern eines ersten Vergleichscodes, insbesondere Audiogerät, CD-Wechsler oder Mobiltelefon, die eine Auswerteeinrichtung zum Vergleich des ersten Vergleichscodes mit einem ersten Identitätscode aufweist und welche bei direkter oder indirekter Übereinstimmung von ersten Vergleichs- und ersten Identitätscode das Zusatzgerät betriebsbereit schaltet oder in Betrieb setzt, ist erfindungsgemäß in einem nicht zugänglichen Bereich des Kraftfahrzeugs und extern von dem Zusatzgerät ein Speicher vorgesehen, in den der ersten Identitätscode bei einer definierten, insbesondere erstmaligen Inbetriebnahme des Zusatzgerätes im Kraftfahrzeug ablegbar ist. Neben einer hohen Diebstahlsicherheit und einer einfachen berechtigten Inbetriebnahme des Zusatzgerätes nach einer Unterbrechung der Betriebsspannung ist beim Einbau des Zusatzgerätes bzw. bei seinem Austausch eine einfache Codierungsanpassung von Zusatzgerät und Kraftfahrzeug möglich.

Nach einer vorteilhaften Ausbildung erfolgt beim Einbau des Zusatzgerätes die Codierungsanpassung, indem über eine Eingabeeinrichtung ein zweiter Identitätscode in die Auswerteeinrichtung eingegeben wird. In der Auswerteeinrichtung wird der Identitätscode mit einem zweiten im Zusatzgerät abgelegten Vergleichscode verglichen. Bei direkte oder indirekter Übereinstimmung beider Codes wird in dem einem nicht zugänglichen Bereich des Kraftfahrzeugs und extern von dem Zusatzgerät vorgesehenen Speicher der erste Identitätscode abgelegt, welcher nach einer Spannungsunterbrechung zur Diebstahlsicherung abgefragt wird. Eine weitere bevorzugte Ausbildung läßt nach dem Vergleich von dem zweiten Identitätscode mit dem zweiten Vergleichscode nur einen beschränkten Betrieb des Zusatzgerätes zu. Dies kann einmal eine beschränkte Betriebszeit oder auch eine beschränkte Einschaltanzahl sein. Aber auch andere Beschränkungen sind denkbar. Durch diese Ausbildung wird ein Service- und Diagnosebetrieb des Zuszatzgerätes auch außerhalb des Kraftfahrzeuges gewährleistet.

Der einem nicht zugänglichen Bereich des Kraftfahrzeugs und extern von dem Zusatzgerät vorgesehene Speicher kann sowohl ein Zusatzspeicher als auch ein Speicher eines vorhandenen Steuergerätes oder eine Anzeigeeinrichtung sein. Gemäß einer weiteren Ausbildung der Erfindung ist der Speicher für den ersten Identitätscode in einem nicht zugänglichen Bereich der Instrumententafel angeordnet

Vorteilhafterweise wird zur Abfrage des Speichers mit dem ersten Identitätscode durch die Auswerteeinrichtung eine bereits im Kraftfahrzeug vorhandene Datenleitung, insbesondere die Diagnoseleitung für den Anschluß eines externen Diagnosegerätes benutzt. Zur Datensicherheit, d. h. der Identitätscode ist über das externe Diagnosegerät nicht abholbar, ist die Datenleitung zum wechselseitigen Anschluß von Speicher- und Diagnosegerät ausgebildet.

Die Auswerteeinrichtung kann bei der erfindungsgemäßen Vorrichtung sowohl im Zusatzgerät als auch im Kraftfahrzeug selbst angeordnet sein.

Erfindungsgemäß ist außerdem ein Verfahren zur Diebstahlsicherung eines Zusatzgerätes vorgesehen, bei dem erster Vergleichscode mit einem ersten Identitätscode verglichen wird, und bei Übereinstimmung des Codes das Zusatzgerät betriebsbereit geschaltet oder in Betrieb genommen wird. Bei diesem Verfahren ist erfindungsgemäß vorgesehen, daß der erste Identitätscode bei einer definierten Inbetriebnahme des Zusatzgerätes in einem in einen nicht zugänglichen Bereich des Kraftfahrzeuges angeordneten Speicher abgelegt wird.

Nachfolgend wird die Erfindung anhand eines Ausführungsbeispiels näher beschrieben. Die zugehörigen Zeichnungen zeigen:
- Figur 1: ein Blockschaltbild der erfindungsgemäßen Vorrichtung,
- Figur 2: ein Ablaufdiagramm eines manuellen Initialisierungslaufs, und
- Figur 3: ein Ablaufdiagramm eines automatischen Initialisierungslaufs.

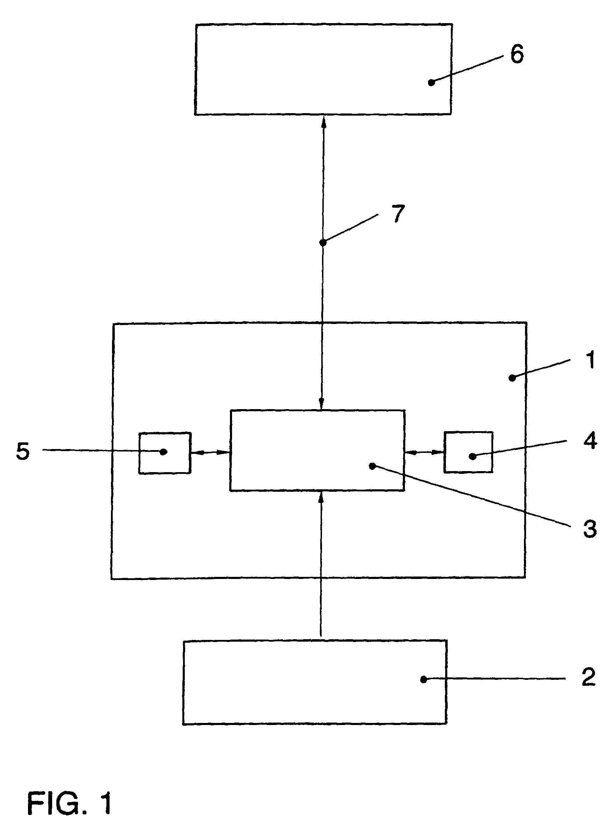

Figur 1 zeigt eine erfindungsgemäße Vorrichtung zur Diebstahlsicherung für ein Audiogerät 1 eines Kraftfahrzeuges. Das Audiogerät selbst weist einen Speicher 4, in dem ein erster gerätespezifischer Vergleichscode S1 abgelegt ist, einen zweiten Speicher 5, in dem ein zweiter gerätespezifischer Vergleichscode S2 abgelegt ist, sowie eine Auswerteeinrichtung 3 zum Vergleich der einspeisbaren Identitätscodes I1; I2 mit dem entsprechenden abgespeicherten Vergleichscode S1; S2 und zur Inbetriebnahme des Audiogeräts bei Übereinstimmung des ersten Identitätscodes I1 mit dem ersten Vergleichscode S1 bzw. des zweiten Identitätscodes I2 mit dem zweiten Vergleichscode S2 auf. Der erste Identitätscode I1 ist bei der ersten Inbetriebnahme des Audiogerätes 1 im Kraftfahrzeug in einem in einen nicht zugänglichen Bereich des Kraftfahrzeuges angeordneten Speichers 6 ablegbar. Der zweite Identitätscode I2, bei dessen Übereinstimmung mit dem Vergleichscode S2 des Speichers 5 einmal das Audiogerät betriebsbereit geschaltet und/oder andererseits der Vergleichscode S1 direkt oder indirekt als Identitätscode I1 in den Speicher 6 ablegbar ist, ist über eine Eingabeeinrichtung 2 manuell eingebbar. Die Identitätscodes I1, I2 müssen mit den Vergleichscodes S1, S2 nicht identisch sein. Sie können auch in einem vorgegebenen oder wechselnden Zusammenhang stehen.

Zur Reduzierung des Verkabelungsaufwandes zwischen Kraftfahrzeug und Audiogerät 1 holt die Auswerteeinrichtung 3 den ersten Identitätscode S1 des Speichers 6 über eine bereits genutzte Datenleitung 7 ab. In modernen Kraftfahrzeugen ist das Audiogerät 1 an die Diagnoseleitung (K-Leitung) angeschlossen, so daß diese Leitung dafür genutzt werden kann. Zur Vermeidung, daß der abgelegte Identitätscode I1 über die Diagnoseleitung unberechtigt abgeholt werden kann, ist die Diagnoseleitung zum wechselseitigen Anschluß des externen Diagnosegerätes und Speichers 6 ausgebildet.

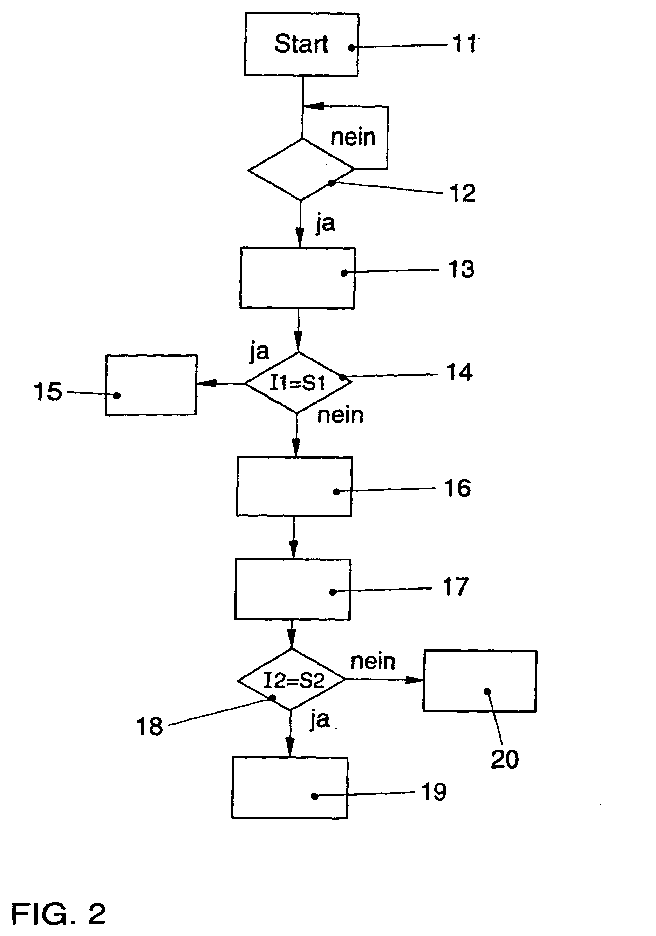

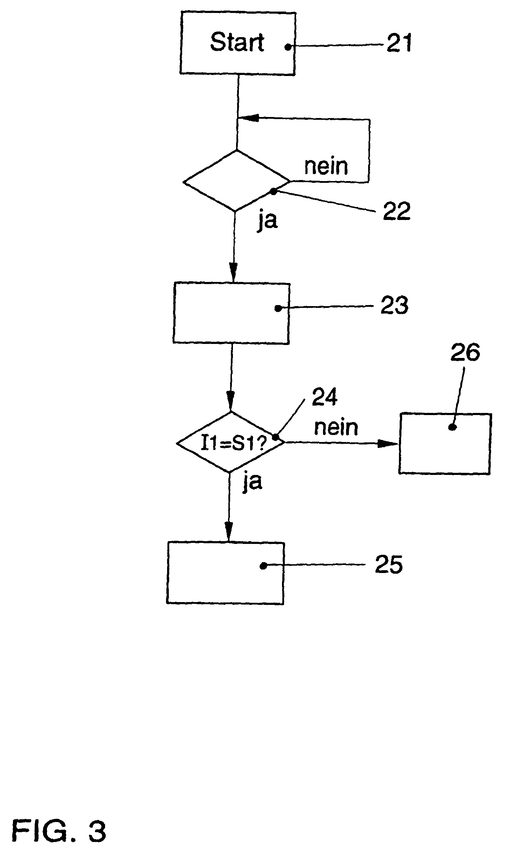

Die Wirkungsweise der erfindungsgemäßen Vorrichtung ist in den Figuren 2 und 3 dargestellt.

Der Ablauf der manuellen Initialisierung der Vorrichtung zur Diebstahlsicherung nach dem Einbau bzw. dem Austausch des Audiogerätes oder des Speichers 6 ist in Figur 2 dargestellt.

Nach dem Start 11 des Initialisierungsprogramms wird im Schritt 12 abgefragt, ob die Diagnoseleitung 7 frei ist, d. h., ob ein Diagnosegerät angeschlossen ist. Kommuniziert ein Diagnosegerät auf der Datenleitung, wird die Abfrage wiederholt. Ist die Diagnoseleitung 7 frei, wird der Identitätscode I1 vom Speicher 6 abgefragt (Schritt 13) und im Schritt 14 mit dem im Audiogerät abgespeicherten Vergleichscode S1 verglichen. Bei Übereinstimmung beider Codes war das Audiogerät schon einmal in diesem Kraftfahrzeug eingebaut. Es wird im Schritt 15 betriebsbereit geschaltet oder in Betrieb genommen. Wird im Schritt 14 festgestellt, daß der Identitätscode I1 nicht mit dem Vergleichscode S1 übereinstimmt, das kann heißen, daß kein Identitätscode I1 vorhanden ist oder der Identitätscode falsch ist, bleibt das Audiogerät im Safe-Mode (Schritt 16). Im Schritt 17 kann dann über die Eingabeeinrichtung 2 der Identitätscode I2 eingegeben werden. Im Schritt 18 wird dieser Identitätscode in der Auswerteeinrichtung 3 des Audiogerätes 1 mit dem Vergleichscode S2 verglichen. Dieser unterscheidet sich vom Vergleichscode S1. Stimmt der Identitätscode I2 mit dem Vergleichscode S2 überein, wird der Identitätscode I1 an den Speicher 6 gesendet und dort abgelegt. Dabei ist es nicht erforderlich, daß der Identitätscode I2 und der Vergleichscode S2 des Audiogerätes identisch sind. Sie können auch in einem vorgegebenen oder wechselnden Zusammenhang stehen (Schritt 19). Es kann im Schritt 19 auch vorgesehen sein, daß das Audiogerät bei Übereinstimmung beider Codes betriebsbereit geschaltet oder in Betrieb genommen wird. Des weiteren kann vorgesehen sein, daß diese Betriebsbereitschaft beschränkt ist, beispielsweise auf 15 Minuten. Dies hat den Vorteil, daß die Funktion des Audiogerätes überprüft werden kann. Wird im Schritt 18 festgestellt, daß der Identitätscode I2 mit dem Vergleichscode S2 nicht übereinstimmt, bleibt das Audiogerät 1 gesperrt und kann nicht in Betrieb genommen werden (Schritt 20).

Neben diesem manuellen Initialisierungsablauf kann nach dem Einbau des Audiogerätes ein verkürzter automatischer Verfahrensablauf vorgesehen werden, wie er in Figur 3 dargestellt ist.

Nach einer Betriebsspannungsunterbrechung am Audiogerät 1 startet der automatische Initialisierungsablauf (Schritt 21), indem im Schritt 22 die Diagnoseleitung 7 abgefragt wird, ob ein externes Diagnosegerät angeschlossen ist. Ist dies nicht der Fall, d. h. die Diagnoseleitung 7 ist frei, wird im Schritt 23 von der Auswerteeinrichtung 3 der Identitätscode I1 aus dem Speicher 6 gelesen. Im Schritt 24 vergleicht die Auswerteeinrichtung den Identitätscode I1 mit dem Vergleichscode S1. Bei Übereinstimmung der beiden Codes wird das Audiogerät 1 im Schritt 25 betriebsbereit geschaltet. Sind Identitätscode I1 und Vergleichscode S1 nicht identisch, bleibt das Audiogerät im Safe-Mode (Schritt 26). Es wird von einer unberechtigten Inbetriebnahme ausgegangen. Liegt diese nicht vor, muß über einen manuellen Initialisierungslauf gemäß Figur 2 der richtige Identitätscode I1 in den Speicher 6 eingelesen werden.

### BEZUGSZEICHENLISTE

- 1: Audiogerät, Zusatzgerät
- 2: Eingabeeinrichtung
- 3: Auswerteeinrichtung
- 4: Speicher
- 5: Speicher
- 6: Speicher
- 7: Datenleitung, Diagnoseleitung
- S1: Vergleichscode
- S2: Vergleichscode
- I1: Identitätscode
- I2: Identitätscode
- 11 - 20: Verfahrensschritt
- 21 - 26: Verfahrensschritt

## Patentansprüche

1. Vorrichtung zur Diebstahlsicherung eines zum Betrieb in Kraftfahrzeugen vorgesehenen Zusatzgeräts (1), welches einen ersten Speicher (4) zum Speichern eines ersten Vergleichscodes (S1) aufweist,
wobei die Vorrichtung eine Auswerteeinrichtung (3) aufweist, die den ersten Vergleichscode (S1) mit einem ersten Identitätscode (I1) vergleicht und bei direkter oder indirekter Übereinstimmung des ersten Vergleichscodes (S1) mit dem ersten Identitätscode (I1) das Zusatzgerät (1) betriebsbereit schaltet oder in Betrieb setzt,
**dadurch gekennzeichnet;**
**dass** die Vorrichtung einen extern von dem Zusatzgerät (1) in einem nicht zugänglichen Bereich des Kraftfahrzeugs vorgesehenen weiteren Speicher (6) zum Speichern des ersten Identitätscodes (I1) bei einer erstmaligen Inbetriebnahme des Zusatzgeräts (1) im Kraftfahrzeug aufweist.

2. Vorrichtung nach Anspruch 1, wobei das Zusatzgerät (1) zur definierten Inbetriebnahme einen zweiten Speicher (5) mit einem zweiten Vergleichscode (S2) aufweist,
**dadurch gekennzeichnet,**
**dass** die Vorrichtung eine Eingabeeinrichtung (2) zum Eingeben eines zweiten Identitätscodes (12) in die Auswerteeinrichtung (3) aufweist, und
**dass** die Auswerteeinrichtung (3) den zweiten ldentitätscode (I2) mit dem zweiten Vergleichscode (S2) vergleicht und bei Übereinstimmung des zweiten Identitätscodes (I2) mit dem zweiten Vergleichscode (S2) den ersten Identitätscode (I1) in dem extern von dem Zusatzgerät (1) vorgesehenen weiteren Speicher (6) ablegt.

3. Vorrichtung nach Anspruch 2,
**dadurch gekennzeichnet,**
**dass** die Auswerteeinrichtung (3) bei Übereinstimmung des zweiten Identitätscodes (12) mit dem zweiten Vergleichscode (S2) einen beschränkten Betrieb des Zusatzgeräts (1) zulässt.

4. Vorrichtung nach einem der Ansprüche 1 bis 3,
**dadurch gekennzeichnet,**
**dass** der extern von dem Zusatzgerät vorgesehene weitere Speicher (6) ein Speicher eines bereits vorhandenen Steuergeräts oder einer bereits vorhandenen Anzeigeeinrichtung ist.

5. Vorrichtung nach einem der Ansprüche 1 bis 3,
**dadurch gekennzeichnet,**
**dass** der extern von dem Zusatzgerät vorgesehene weitere Speicher (6) in einem Bereich einer Instrumententafel des Kraftfahrzeugs angeordnet ist.

6. Vorrichtung nach einem der Ansprüche 1 bis 5,
**dadurch gekennzeichnet,**
**dass** die Auswerteeinrichtung (3) den extern von dem Zusatzgerät (1) vorgesehenen weiteren Speicher (6) über eine Diagnoseleitung (7) abfragt, wobei die Diagnoseleitung (7) zum wechselseitigen Betrieb von dem extern von dem Zusatzgerät (1) vorgesehenen weiteren Speicher (6) und einem externen Diagnosegerät ausgebildet ist.

7. Vorrichtung nach einem der Ansprüche 1 bis 6,
**dadurch gekennzeichnet,**
**dass** die Auswerteeinrichtung (3) in dem Zusatzgerät (1) angeordnet ist.

8. Vorrichtung nach einem der Ansprüche 1 bis 7,
**dadurch gekennzeichnet,**
**dass** die Vorrichtung zur Diebstahlsicherung eines als Audiogerät, CD-Wechsler, Navigationsgerät oder Mobiltelefon ausgestalteten Zusatzgeräts (1) ausgebildet ist.

9. Verfahren zur Diebstahlsicherung eines zum Betrieb in Kraftfahrzeugen vorgesehenen Zusatzgeräts (1),
wobei in einer Auswerteeinrichtung (3) ein in einem ersten Speicher (4) des Zusatzgeräts (1) abgelegter erster Vergleichscode(S1) mit einem ersten Identitätscode (I1) verglichen wird, und
wobei bei Übereinstimmung des ersten Identitätscodes (I1) mit dem ersten Vergleichscode (S1) das Zusatzgerät (1) durch die Auswerteeinrichtung (3) betriebsbereit geschaltet oder in Betrieb gesetzt wird,
**dadurch gekennzeichnet,**
**dass** der erste Identitätscode (I1) bei einer erstmaligen Inbetriebnahme des Zusatzgeräts (1) in einen extern von dem Zusatzgerät (1) in, einem nicht zugänglichen Bereich des Kraftfahrzeugs vorgesehenen weiteren Speicher (6) abgelegt wird.

10. Verfahren nach Anspruch 9,
**dadurch gekennzeichnet,**
**dass** zur erstmaligen Inbetriebnahme des Zusatzgeräts (1) im Kraftfahrzeug über eine Eingabeeinrichtung (2) ein zweiter Identitätscode (I2) eingegeben und mit einem in einem zweiten Speicher (5) des Zusatzgeräts (1) abgelegten zweiten Vergleichscode (S2) in der Auswerteeinrichtung (3) verglichen wird, und
**dass** bei Übereinstimmung des zweiten Identitätscodes (I2) mit dem zweiten Vergleichscode (S2) der erste Identitätscode (I1) in dem extern von dem Zusatzgerät (1) vorgesehenen weiteren Speicher (6) abgelegt wird.

11. Verfahren nach Anspruch 10,
**dadurch gekennzeichnet,**
**dass** bei Übereinstimmung des zweiten Identitätscodes (I2) mit dem zweiten Vergleichscode (S2) ein beschränkter Betrieb des Zusatzgeräts (1) zugelassen wird.

12. Verfahren nach einem der Ansprüche 9 bis 11,
**dadurch gekennzeichnet,**
**dass** der Vergleich des ersten Identitätscodes (I1) mit dem ersten Vergleichscode (S1) zumindest nach einer Unterbrechung der Betriebsspannung am Zusatzgerät (1) durchgeführt wird.

## Claims

1. Device for protecting against theft an accessory (1) which is provided for operation in motor vehicles and which has a first memory (4) for storing a first comparison code (S1),
the device having an evaluation device (3) which compares the first comparison code (S1) with a first identification code (I1), and when the first comparison code (S1) corresponds directly or indirectly to the first identification code (I1) said evaluation device (3) switches the accessory (1) to the standby mode or activates it, **characterized in that** the device has a further memory (6), which is provided outside the accessory (1) in an inaccessible part of the motor vehicle and has the purpose of storing the first identification code (I1) when the accessory (1) is activated in the motor vehicle for the first time.

2. Device according to Claim 1, the accessory (1) having, for the purpose of defined activation, a second memory (5) with a second comparison code (S2), **characterized in that** the device has an input apparatus (2) for inputting a second identification code (12) into the evaluation device (3), and **in that** the evaluation device (3) compares the second identification code (I2) with the second comparison code (S2), and when the second identification code (I2) corresponds to the second comparison code (S2) it stores the first identification code (I1) in the further memory (6) which is provided outside the accessory (1).

3. Device according to Claim 2, **characterized in that** the evaluation device (3) permits restricted operation of the accessory (1) when the second identification code (I2) corresponds to the second comparison code (S2).

4. Device according to one of Claims 1 to 3, **characterized in that** the further memory (6) which is provided outside the accessory is a memory of a control device which is already present or of a display device which is already present.

5. Device according to one of Claims 1 to 3, **characterized in that** the further memory (6) which is provided outside the accessory is arranged in a part of an instrument panel of the motor vehicle.

6. Device according to one of Claims 1 to 5, **characterized in that** the evaluation device (3) interrogates the further memory (6), provided outside the accessory (1), via a diagnostic line (7), the diagnostic line (7) being designed for the alternating operation of the further memory (6) which is provided outside the accessory (1) and of an external diagnostic device.

7. Device according to one of Claims 1 to 6, **characterized in that** the evaluation device (3) is arranged in the accessory (1).

8. Device according to one of Claims 1 to 7, **characterized in that** the device is designed to protect against theft an accessory (1) which is embodied as an audio device, CD changer, navigation device or mobile phone.

9. Method for protecting against theft an accessory (1) which is provided for operation in motor vehicles, a first comparison code (S1) which is stored in a first memory (4) of the accessory (1) being compared with a first identification code (I1) in an evaluation device (3), and
the accessory (1) being switched to a standby mode or being actuated by the evaluation device (3) when the first identification code (I1) corresponds to the first comparison code (S1), **characterized in that**, when the accessory (1) is activated for the first time, the first identification code (I1) is stored in a further memory (6) provided outside the accessory (1) in an inaccessible part of the motor vehicle.

10. Method according to Claim 9, **characterized in that**, in order to activate the accessory (1) in the motor vehicle for the first time, a second identification code (I2) is input by means of an input device (2) and is compared with a second comparison code (S2), stored in a second memory (5) of the accessory (1), in the evaluation device (3), and
**in that**, when the second identification code (I2) corresponds to the second comparison code (S2), the first identification code (I1) is stored in the further memory (6) which is provided outside the accessory (1).

11. Method according to Claim 10, **characterized in that** restricted operation of the accessory (1) is permitted if the second identification code (I2) corresponds to the second comparison code (S2).

12. Method according to one of Claims 9 to 11, **characterized in that** the comparison of the first identification code (I1) with the first comparison code (S1) is carried out at least after the operating voltage at the accessory (1) is disconnected.

## Revendications

1. Dispositif pour la protection contre le vol d'un appareil supplémentaire (1) conçu pour être utilisé dans les véhicules automobiles, lequel présente une première mémoire (4) pour mémoriser un premier code de comparaison (S1), le dispositif présentant un mécanisme d'évaluation (3) qui compare le premier code de comparaison (S1) avec un premier code d'identité (I1) et, en cas de concordance directe ou indirecte du premier code de comparaison (S1) avec le premier code d'identité (I1), met l'appareil supplémentaire (1) en état de fonctionnement ou le met en service, **caractérisé en ce que** le dispositif présente une mémoire supplémentaire (6) prévue à l'extérieur de l'appareil supplémentaire (1) dans une zone non accessible du véhicule automobile pour mémoriser le premier code d'identité (I1) lors d'une première mise en service de l'appareil supplémentaire (1) dans le véhicule automobile.

2. Dispositif selon la revendication 1, l'appareil supplémentaire (1) présentant une deuxième mémoire (5) avec un deuxième code de comparaison (S2) pour une mise en service définie, **caractérisé en ce que** le dispositif présente un dispositif de saisie (2) pour saisir un deuxième code d'identité (I2) dans le dispositif d'évaluation (3), et que le dispositif d'évaluation (3) compare le deuxième code d'identité (I2) avec le deuxième code de comparaison (S2) et, en cas de concordance du deuxième code d'identité (I2) avec le deuxième code de comparaison (S2), enregistre le premier code d'identité (I1) dans la mémoire supplémentaire (6) prévue à l'extérieur de l'appareil supplémentaire (1).

3. Dispositif selon la revendication 2, **caractérisé en ce que** le dispositif d'évaluation (3), en cas de concordance du deuxième code d'identité (I2) avec le deuxième code de comparaison (S2), autorise une utilisation limitée de l'appareil supplémentaire (1).

4. Dispositif selon l'une des revendications 1 à 3, **caractérisé en ce que** la mémoire supplémentaire (6) prévue à l'extérieur de l'appareil supplémentaire est une mémoire d'un appareil de commande déjà présent ou d'un dispositif d'affichage déjà présent.

5. Dispositif selon l'une des revendications 1 à 3, **caractérisé en ce que** la mémoire supplémentaire (6) prévue à l'extérieur de l'appareil supplémentaire est disposée dans une zone d'un tableau de bord du véhicule automobile.

6. Dispositif selon l'une des revendications 1 à 5, **caractérisé en ce que** le dispositif d'évaluation (3) interroge la mémoire supplémentaire (6) prévue à l'extérieur de l'appareil supplémentaire (1) par le biais d'une ligne de diagnostic (7), la ligne de diagnostic (7) étant configurée pour le fonctionnement alterné de la mémoire supplémentaire (6) prévue à l'extérieur de l'appareil supplémentaire (1) et d'un appareil de diagnostic externe.

7. Dispositif selon l'une des revendications 1 à 6, **caractérisé en ce que** le dispositif d'évaluation (3) est disposé dans l'appareil supplémentaire (1).

8. Dispositif selon l'une des revendications 1 à 7, **caractérisé en ce que** le dispositif est configuré pour la protection contre le vol d'un appareil supplémentaire (1) réalisé sous la forme d'un appareil audio, d'un changeur de CD, d'un appareil de navigation ou d'un téléphone mobile.

9. Procédé pour la protection contre le vol d'un appareil supplémentaire (1) conçu pour être utilisé dans les véhicules automobiles, un premier code de comparaison (S1) enregistré dans une première mémoire (4) de l'appareil supplémentaire (1) étant comparé avec un premier code d'identité (I1) dans un dispositif d'évaluation (3) et, en cas de concordance du premier code de comparaison (S1) avec le premier code d'identité (I1), l'appareil supplémentaire (1) est mis en état de fonctionnement ou mis en service par le dispositif d'évaluation (3), **caractérisé en ce que** le premier code d'identité (I1), lors d'une première mise en service de l'appareil supplémentaire (1), est enregistré dans une mémoire supplémentaire (6) prévue à l'extérieur de l'appareil supplémentaire (1) dans une zone non accessible du véhicule automobile.

10. Procédé selon la revendication 9, **caractérisé en ce que** pour la première mise en service de l'appareil supplémentaire (1) dans le véhicule automobile, un deuxième code d'identité (I2) est saisi par le biais d'un dispositif de saisie (2) et comparé dans le dispositif d'évaluation (3) avec un deuxième code de comparaison (S2) enregistré dans une deuxième mémoire (5) de l'appareil supplémentaire (1), et qu'en cas de concordance du deuxième code d'identité (I2) avec le deuxième code de comparaison (S2), le premier code d'identité (I1) est enregistré dans la mémoire supplémentaire (6) prévue à l'extérieur de l'appareil supplémentaire (1).

11. Procédé selon la revendication 10, **caractérisé en ce qu'**en cas de concordance du deuxième code d'identité (I2) avec le deuxième code de comparaison (S2), une utilisation limitée de l'appareil supplémentaire (1) est autorisée.

12. Procédé selon l'une des revendications 9 à 11, **caractérisé en ce que** la comparaison du premier code d'identité (I1) avec le premier code de comparaison (S1) est effectuée au moins après une interruption de la tension de service sur l'appareil supplémentaire (1).
